# EUROPEAN PATENT APPLICATION

(11) **EP 4 685 587 A1**
(43) Date of publication of application: **28.01.2026**
(21) Application number: 24190808.6
(22) Date of filing: 25.07.2024
(51) Int. Cl.: G05B 19/042, G05B 9/03

(54) **METHOD FOR OPERATING A SAFETY CONTROLLER - PARALLELIZATION**

(71) Applicant: ABB Schweiz AG, 5400 Baden (CH)
(72) Inventor: Dirschlmayr, Thomas, 5301 Eugendorf (AT); Kaufleitner, Franz, 5122 Hochburg-Ach (AT); Dechant, Franz, 5121 Tarsdorf (AT); Greil, Bernhard, 4780 Schärding (AT); Thiemann, Bernd, 4910 Ried im Innkreis (AT); Novosel, Florian, 8010 Graz (AT); Kratzer, Nino, 5020 Salzburg (AT)
(74) Representative: Patentanwälte Pinter & Weiss OG

(57) **Abstract**

In order to provide an efficient method for operating a safety controller (3) for a safety related engineering system (1), a set of safety functions (SF1, SF2) defining logical dependencies between sensor signals (32S) and actuator signals (33S) is provided and grouped into a first and a second class (C1, C2) of safety functions (SF1, SF2), the first class (C1) of safety functions (SF1) is compiled and linked to obtain a first executable program code, the second class (C2) of safety functions (SF2) is compiled and linked to obtain a second executable program code, the first and second executable program code are transferred to a memory (ROM) of the safety controller (3), the first executable program code is executed by a first processor (31a) and the second executable program code is executed by a second processor (31b) of the safety controller (3), generating actuator signals (33S) from sensor signals (32S).

## Description

### Field of the invention

The present invention relates to a method for operating a safety controller, which has a plurality of inputs for receiving sensor signals, a plurality of outputs for outputting actuator signals, a first processor and a second processor for executing program code, as well as to a programming tool for programming a safety controller and a safety-related engineering system comprising a safety controller.

### Background

Safety-related systems and/or applications must meet high requirements, particularly with regards to averting dangers to people, machinery, goods, etc. Safety-related systems are therefore planned and designed to operate robustly with regards to probabilistic and systematic faults. Definitions of said requirements can be found in the international IEC 61508 series of standard. IEC 61508 defines (functional) safety as a "part of the overall safety relating to the EUC (Equipment Under Control) and the EUC control system which depends on the correct functioning of the E/E/PE safety-related systems, other technology safety-related systems and external risk reduction facilities." The fundamental concept is that any safety-related system must work correctly or must only fail in a predictable (safe) way.

In mechanical engineering, engineering systems with a limited functionality range are oftentimes used to create, generate, and maintain safety-related systems, e.g. production lines or logistics systems or automatic assembly stations or test beds. By limiting the range of available functions, complexity is reduced and potentially dangerous functions are sorted out a priori, increasing safety and reliability of an engineering system, as well as allowing for simpler procedures for testing and validating a system.

An established option to achieve said reduction of complexity, in accordance with IEC 61508, is to use what is well-known as limited variability language ("LVL"), in order to program, e.g., a control unit of an engineering system. When using LVL, it is allowed to limit the validation of the safety system to only a code review, simple testing and a wiring test. If LVL is not used, i.e., if the safety application is implemented in an engineering system without restrictions ("FVL" - full variability language), for example by programming in unrestricted "C" programming language, additional and oftentimes complex validation measures such as proof of the systematic integrity of the code, determination of the complexity of the code (complexity metrics), unit test with a code coverage of almost 100%, etc. must be carried out. Implementing and carrying out such additional, but necessary validation measures is time-consuming, cost-intensive and requires special IT expertise as well special IT infrastructure. For these reasons, LVL-based engineering systems are predominantly used for safety-related applications in mechanical engineering as well as in other engineering disciplines.

To comply with the requirements of the IEC 61508 series of standards, LVL-based engineering systems usually only provide a single control unit / a single controller and do not support parallelization and/or multitasking. Also the prior art, as known, e.g., from US 11,809,697 B2 or from EP 3 173 884 B1, typically limits the processing of a safety-related application to only one task in a safe control system. As a result, all functions, tasks, computations, etc., must be implemented in a single task, in a pre-described chronological order. As a result, it can happen that a task in a safety-related control system becomes so large that a cycle time for processing such a task becomes very large. If a safety function requires a short response / reaction time and/or a short turnaround time, a conflict of objectives may arise.

As a workaround, additional, i.e., parallel safety control units are frequently installed, in which only the safety functions with the short response / reaction times are implemented. Such parallel safety control units typically each comprise their own compilers, linkers, interfaces, etc., to be able to create executable code on each control unit itself. This approach, however, is accompanied with the drawback that the entire safety application gets divided into several parts, as engineering systems known from the prior art do not support the programming of several parallel safety controllers or tasks. In addition, the user him- or herself must ensure that the correct tasks are installed in the correct safety controller. This approach is thus prone to errors and causes additional maintenance and testing costs. In addition, said approach offers only limited flexibility, since by distributing the tasks over potentially many separate safety projects and safety controllers, redistributing and (re)connecting parallelized tasks is oftentimes no longer possible after separation.

### Summary

It is therefore an object of the present invention to provide a flexible and efficient method for operating a safety controller.

To achieve said objective, the present invention suggests a method for operating a safety controller, which may in particular be used to run a safety related engineering system, which has a plurality of inputs for receiving sensor signals, a plurality of outputs for outputting actuator signals, a first processor and a second processor for executing program code. The method according to the invention comprises at least five steps:
First, a set of, i.e., at least two, safety functions which define logical dependencies between the sensor signals and the actuator signals is provided, each safety function having a pre-defined classification feature. Second, said set of safety functions are grouped into at least a first class of safety functions and a second class of safety functions, depending on the respective classification features of said safety functions. Third, by means of a single compiler, said first class of safety functions is compiled and linked to obtain a first executable program code, and said second class of safety functions is compiled and linked to obtain a second executable program code. In a fourth step, the first and second executable program code are transferred to at least one memory of the safety controller, wherein, preferably, each processor may have its own memory where the program code the processor needs to execute is transferred to. Fifth, the first executable program code in the at least one memory is executed by means of the first processor, and the second executable program code in the at least one memory is executed by means of the second processor, generating the actuator signals as a function of the sensor signals.

According to the invention, the classification of the safety functions and the compilation and linking of the first class of safety functions to a first executable program code as well as the compilation and linking of the second class of safety functions to a second executable program code are carried out in a single compiler. The use of just a single compiler and thus of just a single compiler run to group the safety functions represent a significant advantage over the prior art, in which either all safety functions are compiled into a single executable program code by means of a single compiler run or, if multiple processors are used, multiple compilers and thus multiple, parallel compiler runs are necessary. Consequently, the invention reduces the component count, while still fulfilling the requirements of the IEC 61508 series of standard. Moreover, the invention allows to carry out said grouping automatically. In the prior art, in case a multiple of at least two parallel compilers were used, it was up to the user to separate and group safety functions, since the parallel systems to which the safety functions were distributed to were not linked, making operating a safety-related engineering system less user-friendly and inconvenient.

The pre-defined classification features assigned to the safety functions may be defined by a user or may be defined by a norm, e.g., IEC 61508, or may be the result of the overall safety concept of an engineering system etc.

Preferably, said safety functions are programmed by means of a limited variability computer programming language, in order to reduce complexity and simplify testing and verification, and may be selected from the group consisting of the safety functions Safe Torque Off (STO), Safe Torque Off One Channel (STO1), Safe Operation Stop (SOS), Safe Stop 1 (SS1), Safe Stop 2 (SS2), Safely Limited Speed (SLS), Safe Maximum Speed (SMS), Safe Direction (SDI), Safely Limited Increment (SLI), Safely Limited Acceleration (SLA), Safe Brake Control (SBC), Safely Limited Position (SLP), Safe Maximum Position (SMP), Safe Brake Test (SBT), Remanent Safe Position (RSP), depending on the needs and requirements of a given use case. Said safety functions preferably process sensor signals generated by means of safety sensors selected from the group consisting of light grids, light curtains, emergency stop buttons, safety limit switches, safety interlock switches, contactless safety magnetic switches, and contactless RFID safety sensors, creating an actuator signal according to the safety function.

Moreover, in a preferred fashion, it is made sure that the safety functions grouped in said first class of safety functions are independent of the safety functions grouped in said second class of safety functions. Independence between safety functions preferably means that a safety function does not rely on results of another safety function that it is independent from. In case dependencies exist, these are preferably taken into account when grouping the safety functions, such that safety functions that are dependent of one another are grouped to the same processor.

The classification features used for grouping the safety functions preferably correspond to a required reaction time or required turnaround time or required response time of a safety function, or to a security and/or safety level of a safety function, or to a number of calculation steps required to carry out a safety function, or to a number of parameters used in a safety function etc. As the invention allows to use automatic grouping of safety functions, also complex approaches may be employed to carry out the grouping. For instance, the metrics referred to above may also be combined, or may first be weighted and then combined. In a particularly preferable manner, in the scope of the invention, complex distribution algorithms and/or complex optimization algorithms may be employed to group the safety functions. In a particularly preferable fashion, logistical algorithms or optimization algorithms or algorithms for combinatorial optimization may be employed to group and thus allocate said safety functions to the processors, e.g., genetic algorithms or the Kuhn-Munkres algorithm or the Hungarian method or linear programming or an auction algorithm etc. Algorithms for combinatorial optimization turn out to be particularly well-suited in the present context, allowing for good results by causing only little computation cost, and are well known from the prior art, cf., e.g., WO 2020/047444 A1.

As it is typically the case in practice, said safety functions are executed not just once, but repeatedly, hence a potentially large number of times. The safety functions grouped in said first class of safety functions are thus organized in at least one periodically executed first-class program task, and the safety functions grouped in said second class of safety functions are organized in at least one periodically executed second-class task program. As is well-known from, e.g., the field of PLC programming, a frequency by which a task is executed may be predefined in the form of a fixed sampling frequency, but may also be the result of a turnaround time of a task. The frequency by which a task is executed in such a case corresponds to the inverse of its turnaround time. The safety functions in a task inherit the turnaround times from the task they are organized in. Hence, in order to make sure that each safety function in a task is executed with a turnaround time less than a predefined turnaround-time for the safety function itself, it is preferably made sure that the entire task that groups a multiple of safety functions has a turnaround-time that is smaller than the smallest individual turnaround time assigned to a safety function in the task. As is well-known, turnaround time is the amount of time elapsed from the time of initiation of a function to the time of completion of the function, whereas response time is the average time elapsed from submission / initiation until the first response is produced. Typical turnaround times / response times / reaction times may range from times less than 1µs to times larger than 100ms.

When using a complex strategy for grouping safety functions, the result sometimes turns out to be counterintuitive. Generally speaking, it sometimes turns out to be useful to group particularly slow and particularly fast safety functions in a class, so that an appropriate response time can be achieved for all safety functions in a class. However, other concepts for the design of the classification features are also conceivable, so that these classification features can, for example, also correspond to a safety level of a safety function, representing e.g. the priority of the safety function in an overall safety concept of an engineering system, enabling, e.g., the implementation of a safety integrity level like SiL 1, SiL 2, SiL 3, or SiL 4, or that said classification features can, for example, also correspond to a number of calculation steps required to carry out a safety function.

Another, particularly beneficial embodiment of the invention is achieved by making sure that an output of the safety controller is assigned to only one program task, and hence to only one processor present in the safety controller. In this fashion, it is ensured that conflicts between different safety functions that try to write on the same output, i.e., assign output values to this output, are avoided. On the contrary, it is of course acceptable and in many practical use cases also preferable to have different and especially more than one safety functions read and process an input signal provided by one input of the safety controller.

The method according to the invention is preferably carried during commissioning or during maintenance of an engineering system, essentially when flashing a safety controller with new software and when a potential regrouping of safety function does not interfere with the operation of the engineering system.

Additionally, the object laid out above is achieved by a programming tool for programming a safety controller of a safety-related engineering system, which safety controller has a plurality of inputs for receiving sensor signals, a plurality of outputs for outputting actuator signals, a first processor and a second processor for executing program code, the programming tool being designed to carry out the steps of providing a set of safety functions which define logical dependencies between the sensor signals and the actuator signals, each safety function having a pre-defined classification feature; grouping said set of safety functions into at least a first class of safety functions and a second class of safety functions, depending on the respective classification features of said safety functions, by means of a single compiler, compiling and linking said first class of safety functions to obtain a first executable program code and compiling and linking said second class of safety functions to obtain a second executable program code, transferring the first and second executable program code to at least one memory of the safety controller, enabling to execute the first executable program code by means of the first processor and to execute the second executable program code by means of the second processor, in order to generate the actuator signals as a function of the sensor signals.

Moreover, the object is also achieved by an engineering system comprising an engineering station, said programming tool, and a safety controller having a plurality of inputs for receiving sensor signals, a plurality of outputs for outputting actuator signals, a first processor and a second processor for executing program code, the safety controller being designed to be operated by means of the programming tool in accordance with the method according to the invention.

### Detailed description

The present invention is described below in greater detail with reference to Figs.1 to 3, which show schematic and non-limiting advantageous embodiments of the invention by way of example. In the drawings:
Fig.1 shows a simplified representation of an engineering system controlled by a safety controller according to the invention,
Fig.2 shows a schematic representation of a safety controller,
Fig.3 shows periodically executed tasks each comprising a set of safety functions.

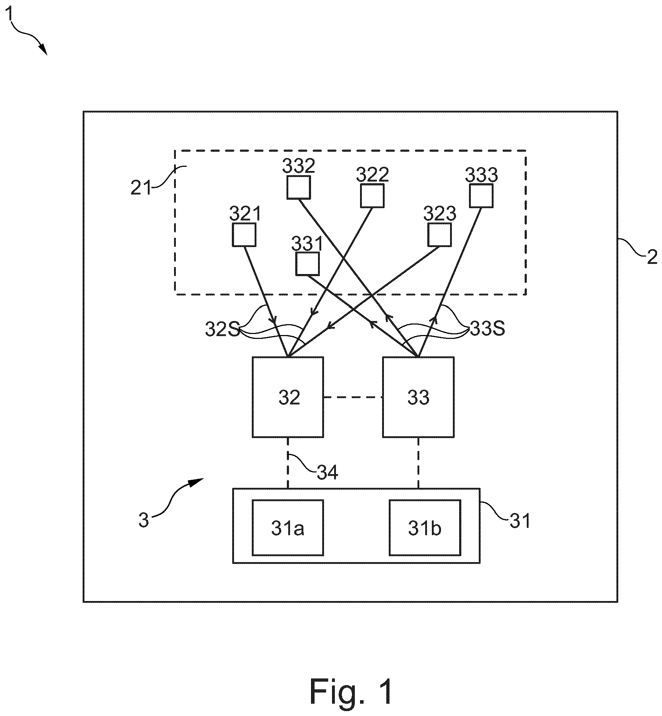

In Fig. 1 schematically shows a safety-related engineering system 1 which is controlled by means of a safety controller 3. The engineering system 1 comprises an engineering station 2, which may correspond to an assembly station, or to a processing station, or to a test station, or to a conveyor unit, or to a packaging and palletizing station. Of course, in an engineering system 1, also multiple engineering stations 2 are conceivable and oftentimes present in practice. By means of a multiple of engineering stations 2, complex sequencies of station-specific processing steps can be implemented. In that sense, a first processing step carried in a first engineering station 2 may be followed by a successive, second processing step carried in a second engineering station 2, the second step building on the outcome of the first step. For instance, a product may be assembled in an assembly station, and later be packaged in a packaging station. It is assumed hereafter that the steps carried out in the engineering station 2 at least partially constitute safety related processes, and thus demand special security measures, hence turning the engineering system 1 shown into a safety-related engineering system 1.

The safety controller 3 represents a system of a potentially large number of hardware components, which may all be arranged on or in an engineering station 2, but may, at least partially, also be arranged outside of an engineering station 2. In particular the safety controller 3 represents at least a first programmable processor 31a and a second programmable processor 31b, said programmable processors 31a, 31b in the case shown being exemplarily comprised in a superordinate processing device 31. The safety controller 3 may further comprise a sensor device 32 and an actuator device 33, as well as several software components, such as safety-related computer programs executed on the processors 31a, 31b. In preferred embodiments of the engineering system 1, said sensor device 32 and actuator device 33 may be modularly assembled I/O devices to which a large number of different sensors 321, 322, 323 and actuators 331, 332, 333 can be connected, such as position sensors or switches, rotary encoders, temperature sensors, solenoid valves, contactors and / or electrical drives, robot arms, electrical manipulators etc., the sensors 321, 322, 323 providing sensor signals 32S to the processors 31a, 31b and the actuators 33 receiving actuator signals 33S from the processors 31a, 31b, in order to carry out processing steps as the ones mentioned at the outset, such as assembling, cleaning, packaging, etc. In a preferred embodiment, a processing device 31 can form a combined assembly together with a modular sensor device 32 and an actuator device 33. As depicted in Fig.1, the processing device 31, the sensor device 32 and the actuator device 33 are connected to one another via a communication network 34. Said communication network 34 may include an Ethernet-based bus system or a CAN-based bus system or another bus system, which bus systems are of course well-known from the prior art.

An engineering station 2 like the one shown in Fig.1 typically comprises a working area 21, in which said processing and / or working steps (assembling, packaging, cleaning, filling, testing, ...) are carried out. Such working areas 21 are oftentimes secured, for example, by protective doors which only allow access in case an assigned control unit has controlled the station in a safe state. Alternatively, or in addition, light grids or light curtains can be used, and / or said engineering stations 2 can be provided with emergency stop buttons with which an engineering station 2 can be brought into a safe state, in particular by disconnecting the engineering station 2 from power supply or at least by disconnecting potentially dangerous components (actuators, tools, machines, ...) comprised in the engineering station 2 from power supply.

Protective doors, light grids, light curtains and emergency stop buttons are typical safety-related sensors whose output signals are logically linked to control safety-related actuators, such as contactors in the power supply path of a station 2. Said sensors 321, 322, 323 of an engineering station 2 can include safety-related sensors as well as non-safety-related sensors, which non-safety-related sensors may be required to operate the engineering station 2, for example, detecting operational speeds, angles, positions or other signals. The actuators 331, 332, 333 can likewise include safety-related as well as non-safety-related actuators, in particular motors or actuating cylinders or conveyor belts or robot arms, etc. Employing such safety sensors and safety actuators, it becomes possible to implement safety functions such as Safe Torque Off (STO), Safe Torque Off One Channel (STO1), Safe Operation Stop (SOS), Safe Stop 1 (SS1), Safe Stop 2 (SS2), Safely Limited Speed (SLS), particularly with regards to the speed of joints of industrial robots, Safe Maximum Speed (SMS), Safe Direction (SDI), Safely Limited Increment (SLI), Safely Limited Acceleration (SLA), Safe Brake Control (SBC), Safely Limited Position (SLP), Safe Maximum Position (SMP), Safe Brake Test (SBT), Remanent Safe Position (RSP), or other safety functions, e.g. Safety Limited Torque (SLT), or Safely Limited Orientation of the Tool Center Point or Safe Limited Working Space for the robot, and many more. These safety functions are typically independent of one another, and are of course well-known from the prior art.

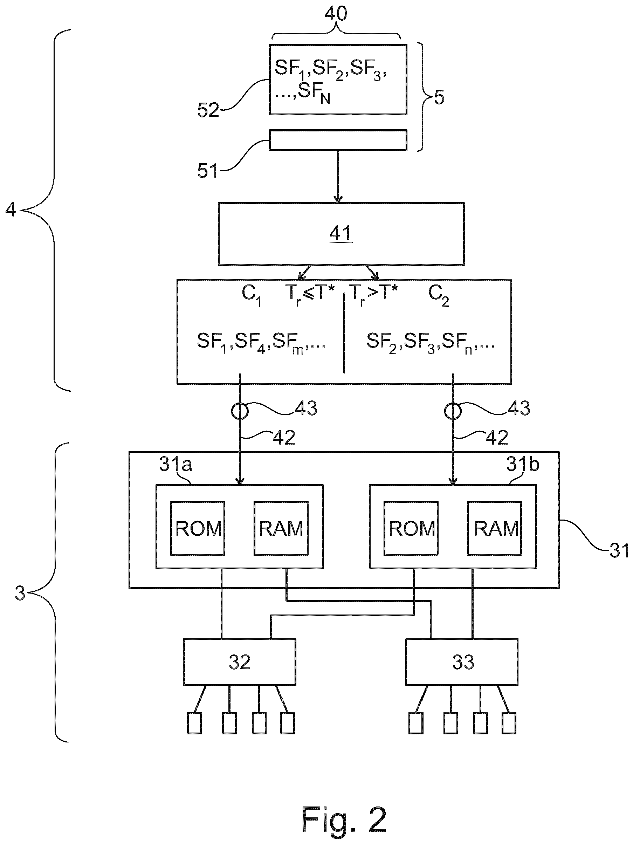

In Fig.2, a safety controller 3, which may in particular comprise components implemented in the form of a microprocessor or a microcontroller or an integrated circuit (ASIC, FPGA), is shown in detail, together with a programming tool 4. In preferred embodiments like the one shown, the programming tool 4 preferably comprises at least a computing unit 5, preferably a PC or a laptop or a mini-PC etc., on which a computer program 40, i.e., software, may be programmed. On a computing unit 5, a broad range of technology for programming a software can be employed, independent of an operating system (Windows, Unix, ...), e.g. Web Based Engineering tools etc. In a preferred embodiment, the programming tool 4 may provide a program editor 51 and a display 52, enabling a user to write said computer program 40 for the safety controller 3, typically in a programming language that suits the needs of a given application. As mentioned at the outset, in the present case, particularly limited variability languages (LVL) are used to write a computer program 40 and hence program files PF. By means of said programming language, it becomes possible to define safety functions SF1, SF2... which define logical dependencies between selected sensor signals 32S and selected actuator signals 33S.

The programming tool 4 includes a compiler 41, with the aid of which a program part created in a higher programming language, particularly LVL (limited variability languages), can be translated into a machine-readable machine code that can be executed by the processors 31a, 31b. The compiler 41 may also contain a binder or a linker, with the aid of which several code parts, e.g. from different libraries that have been called by reference, can be combined to form executable program code for the processors 31a, 31b. Typically, a binder or linker combines a plurality of pieces of code into an executable program code 42, which is then sent to the processors 31 to be executed.

Usually, the programming tool 4 has an interface, via which the executable program code 42 can be transferred to a memory ROM of the processors 31a, 31b. In preferred exemplary embodiments, the memory ROM is a non-volatile memory, for example in the form of an EEPROM. As depicted in Fig.2, each processor 31a, 31b has its own memory ROM. However, it is also conceivable to provide just a single memory outside the processors that all processors can access. Additionally, which is frequently the case in practice, a second, volatile memory RAM may be provided in the processors 31b as well. In such a case, the programming tool 4 may be equipped with a further interface, via which said volatile memory RAM may be accessed. Compilers 41, linkers and binders are of course well-known from the prior art, cf., e.g., US 10, 152,309 B2. In preferred embodiments, the interface for programming and the programming tool 4 can be designed separately. This has the advantage that no programming tool 4 and no source code, etc. are required to program the controller. It is sufficient if the machine-readable code is available and the interface is able to transfer this code to the correct processor 31a or 32b. A design with a separable programming tool 4 offers advantages, particularly in the case of maintenance, when a defective controller 31 is replaced by a device from the warehouse that has not yet been programmed, because no programming tool 4, no source code, and no experts are required in the case of maintenance.

As mentioned at the outset, the prior art does not provide for the ability to parallelize safety-related program code. While it is known from the prior art to create identical and thus redundant executable code that is executed in parallel, all safety-related functionalities, particularly implementations of the safety functions SF mentioned above, are put in one task. As a result, it can happen that a safety task in a safety controller 3 becomes so large that the cycle time for processing such a task becomes very long or potentially even too long, such that a safety function SF can no longer be executed in its required reaction time or turnaround time or response time etc. If a safety function SF requires a short response and/or a short turnaround time and/or a short response time, but is still stacked in a task with large turnaround time, a conflict of objectives may arise.

To overcome these problems, the present invention suggests a programming tool 4 for programming a safety controller 3 of a safety-related engineering system 1. As explained above, the safety controller 3 considered within the scope of the invention has a plurality of inputs for receiving sensor signals 31S, a plurality of outputs for outputting actuator signals 32S, and a first processor 31a and a second processor 31b for executing program code.

The programming tool 4 according to the invention is designed to provide a set of safety functions SF1, SF2 which define logical dependencies between the sensor signals 30 and the actuator signals 32. In this respect, it is of particular importance that each safety function SF1, SF2 is assigned with a pre-defined classification feature Tr1, Tr2, based on which the programming tool 4 is capable of grouping said set of safety functions SF1, SF2 into at least a first class C1 of safety functions SF1, SF2 and a second class C2 of safety functions SF1, SF2, depending on the respective classification features Tr1, Tr2 of said safety functions SF1, SF2. The classification features Tr1, Tr2 preferably correspond to a required reaction or response or turnaround time of a safety function SF1, SF2, such that safety functions requiring fast processing can be grouped in a first class C1, and other safety functions SF1, SF2 requiring only slower reaction may be organized in second class C2, such that at the end of the grouping, all safety functions SF1, SF2 can be carried in a reaction time that is sufficient for the purpose of a respective safety function SF1, SF2. In case the classification features Tr1, Tr2 correspond to a reaction or response or turnaround time, the classification and thus grouping may be carried out by comparing the time to a threshold T*, and depending on whether the threshold T* is surpassed or not, assign the safety function to a first class C1 or a second class C2. Of course, in case more than two processors 31a, 31b are provided, also more than just one threshold may be provided, defining different intervals of classification feature values, which may all be assigned to a specific processor. However, also more complex strategies may be used, as mentioned earlier, preferably based on optimization algorithms.

According to the invention, the classification of the safety functions SF1, SF2 and the compilation and linking of the first class C1 of safety functions SF1 to a first executable program code as well as the compilation and linking of the second class C2 of safety functions SF2 to a second executable program code are carried out in a single compiler 41. The use of just a single compiler and thus of just a single compiler run to group the safety functions SF1, SF2 represents a significant advantage over the prior art, in which either all safety functions are compiled into a single executable program code in a single compiler run or, if multiple processors are used, multiple compilers are necessary. It can sometimes be useful to group particularly slow and particularly fast safety functions SF1, SF2 in a class C1, C2, so that an average response time can be achieved for all safety functions SF1, SF2 in a class that enables sufficiently fast processing. However, other concepts for the design of the classification features Tr1, Tr2 are also conceivable, so that these classification features Tr1, Tr2 can, for example, also correspond to a safety level of a safety function SF1, SF2 or that these classification features Tr1, Tr2 can, for example, also correspond to a number of calculation steps required to carry out a safety function SF1, SF2.

According to the considerations laid out previously, the programming tool 4 is further designed to transfer the first and second executable program code to at least one memory ROM of the safety controller 24, such that the first executable program code can be executed by means of the first processor 31a, 31b, and that the second executable program code can be executed by means of the second processor 31a, 31b, in order to generate said actuator signals 33S as a function of the sensor signals 32S. In contrast to the prior art, the processors 31a, 31b do not operate redundantly to one another, but in fact carry out different safety-relevant tasks, which stem from the fact that said safety functions have been grouped in different classes C1, C2 a priori. The invention describes a method that allows multiple tasks to be configured on multiple safe controllers in a safety-relevant application.

In a preferred embodiment of the invention, said processors 31a, 31b may be implemented identically, i.e., in the form of the same hardware, e.g., as microcontrollers or mixed signal microcontrollers or as FPGAs etc. However, depending on the use case, it can also be reasonable to implement at least one of the controllers as an FPGA, allowing for particularly fast processing of safety functions, preferably a small number of safety functions that need to be processed particularly fast, and at least one other of the controllers as a microcontroller, allowing for slower processing but more convenient to program. As mentioned previously, depending on the needs of a specific use case, different kinds of optimization algorithms may be employed to group and thus allocate said safety functions to the processors. In such an optimization, also the hardware implementation of the controllers may be considered.

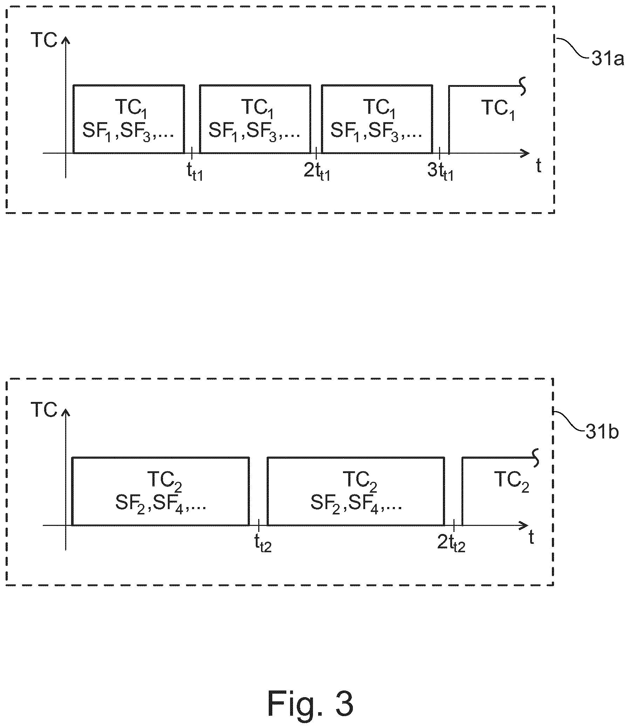

When implementing the method according to the invention, it is most of the times reasonable to organize the safety functions SF1 in said first class C1 in at least one periodically executed first-class program task TC1, and the safety functions SF2 in said second class C2 of safety functions SF1, SF2 in at least one periodically executed second-class task program TC2, as is shown in Fig.3. As presented in Fig.3, a small time buffer may be reserved after a task TC is finished, and before the task is executed another time. However, it may also be provided to start with the next execution of a task TC immediately after a previous execution has been finished. Said buffer time, however, typically is so small that it can be neglected, such that the time points tᵣ₁, 2tᵣ₁, 3tᵣ₁, tᵣ₂, 2tᵣ₂ etc. between the instances of tasks TC1, TC2, can be regarded as a turnaround time tₜ of a task TC₁, TC₂. From Fig.3, it can be seen clearly that the safety functions SF1, SF3 comprised in task TC₁, which is processed in the first processor 31a, require smaller reaction times, such that the entire task TC₁ requires a smaller turnaround time tₜ₁. The safety functions SF2, SF4 allow for, and potentially also require, longer reaction and thus turnaround times ttz. With the invention, it becomes possible to easily, effectively and most importantly automatically group these functions in appropriate tasks TC1, TC2, making sure that each safety function is processed in an appropriate time.

With regards to said tasks TC1, TC2, a particularly beneficial embodiment of the invention may be achieved by ensuring that an output of the safety controller 3 is assigned to only one program task TC1, TC2. Making sure that only one single task, irrespective of which processor 31a, 31b the task is assigned to, is allowed to send a signal to an actuator, ensures that no conflicts arise with regards to using an actuator. In case an output of a safety function is eventually not fed to an actuator, this can have severe consequences for the overall safety of an engineering system 1, as this may hinder a proper functioning of the safety function. As mentioned earlier, an input may, however, be read and processed by more than one task, as reading in most practically relevant cases does not lead to conflicts.

To summarize, the invention allows for a flexible and efficient method for programming and operating a safety controller that is still easy to use. The method is flexible and may be carried out during commissioning or during maintenance of an engineering system 1 controlled by a safety controller 3 according to the previous considerations. It becomes possible to divide the tasks of a safety application into "manageable" tasks. This promotes the modularity of the safe application, while still relying on only one compiler. In addition, the timing behavior of time-critical safety functions SF and thus tasks can be designed independently of the size or scope of other safety functions SF.

## Claims

1. A method for operating a safety controller (3) which has a plurality of inputs for receiving sensor signals (32S), a plurality of outputs for outputting actuator signals (33S), a first processor (31a) and a second processor (31b) for executing program code, the method comprising the steps of:
- providing a set of safety functions (SF1, SF2) which define logical dependencies between the sensor signals (32S) and the actuator signals (33S), each safety function (SF1, SF2) having a pre-defined classification feature (Tr1, Tr2);
- by means of a single compiler (41), grouping said set of safety functions (SF1, SF2) into at least a first class (C1) of safety functions (SF1, SF2) and a second class (C2) of safety functions (SF1, SF2), depending on the respective classification features (Tr1, Tr2) of said safety functions (SF1, SF2),
- by means of said single compiler (41), compiling and linking said first class (C1) of safety functions (SF1) to obtain a first executable program code and compiling and linking said second class (C2) of safety functions (SF2) to obtain a second executable program code,
- transferring the first and second executable program code to at least one memory (ROM) of the safety controller (3),
- executing the first executable program code in the at least one memory (ROM) by means of the first processor (31a) and executing the second executable program in the at least one memory (ROM) code by means of the second processor (31b), in order to generate the actuator signals (33S) as a function of the sensor signals (32S).

2. The method according to claim 1, **characterized in that** said safety functions (SF1, SF2) are programmed by means of a limited variability computer programming language.

3. The method according to any one of the previous claims, **characterized in that** said classification features (Tr1, Tr2) correspond to a required turnaround time or reaction time or response time of a safety function (SF1, SF2) **and / or in that** said classification features (Tr1, Tr2) correspond to a security level and/or safety level of a safety function (SF1, SF2) **and / or in that** said classification features (Tr1, Tr2) correspond to a number of calculation steps required to carry out a safety function (SF1, SF2).

4. The method according to any one of the previous claims, **characterized in that** the safety functions (SF1) grouped in said first class (C1) of safety functions (SF1, SF2) are organized in at least one periodically executed first-class program task (TC1) **and in that** the safety functions (SF2) grouped in said second class (C2) of safety functions (SF1, SF2) are organized in at least one periodically executed second-class task program (TC2).

5. The method according to claim 4, **characterized in that** said classification features (Tr1, Tr2) correspond to a respective required turnaround time or reaction time of said safety functions (SF1, SF2) **and in that** each processor (31a, 31b) periodically executes each program task (TC1, TC2) assigned to the processor (31a, 31b) such that all safety functions (SF1, SF2) organized in said program tasks (TC1, TC2) are executed within their respective turnaround or reaction times (Tr1, Tr2).

6. The method according to any one of claims 3 to 5, **characterized in that** an output of the safety controller (3) is assigned to only one program task (TC1, TC2).

7. The method according to any one of the previous claims, **characterized in that** said safety functions (SF1, SF2) are selected from the group consisting of the safety functions Safe Torque Off (STO), Safe Torque Off One Channel (STO1), Safe Operation Stop (SOS), Safe Stop 1 (SS1), Safe Stop 2 (SS2), Safely Limited Speed (SLS), Safe Maximum Speed (SMS), Safe Direction (SDI), Safely Limited Increment (SLI), Safely Limited Acceleration (SLA), Safe Brake Control (SBC), Safely Limited Position (SLP), Safe Maximum Position (SMP), Safe Brake Test (SBT), Remanent Safe Position (RSP).

8. The method according to any one of the previous claims, **characterized in that** said safety functions (SF1, SF2) process sensor signals (32S) generated by means of a safety sensor selected from the group consisting of light grids, light curtains, emergency stop buttons, safety limit switches, safety interlock switches, contactless safety magnetic switches, and contactless RFID safety sensors, creating an actuator signal (33S) according to the safety function (SF1, SF2).

9. The method according to any one of the previous claims, **characterized in that** the safety functions (SF1) grouped in said first class (C1) of safety functions (SF1, SF2) are independent of the safety functions (SF2) grouped in said second class (C2) of safety functions (SF1, SF2).

10. The method according to any one of the previous claims, **characterized in that** the method is carried during commissioning or during maintenance of an engineering system (1) controlled by said safety controller (3).

11. The method according to any one of the previous claims, **characterized in that** the safety controller (3) is a safety controller (3) fulfilling the requirements corresponding to norm IEC 61508.

12. Programming tool (4) for programming a safety controller (3) of a safety-related engineering system (1), which safety controller (3) has a plurality of inputs for receiving sensor signals (32S), a plurality of outputs for outputting actuator signals (33S), a first processor (31a) and a second processor (31b) for executing program code, the programming tool (4) being designed to carry out the steps of
- providing a set of safety functions (SF1, SF2) which define logical dependencies between the sensor signals (32S) and the actuator signals (33S), each safety function (SF1, SF2) having a pre-defined classification feature (Tr1, Tr2);
- grouping said set of safety functions (SF1, SF2) into at least a first class (C1) of safety functions (SF1, SF2) and a second class (C2) of safety functions (SF1, SF2), depending on the respective classification features (Tr1, Tr2) of said safety functions (SF1, SF2),
- by means of a single compiler, compiling and linking said first class (C1) of safety functions (SF1) to obtain a first executable program code and compiling and linking said second class (C2) of safety functions (SF2) to obtain a second executable program code,
- transferring the first and second executable program code to at least one memory (ROM) of the safety controller (3), enabling to execute the first executable program code by means of the first processor (31a, 31b) and to execute the second executable program code by means of the second processor (31a, 31b), in order to generate the actuator signals (33S) as a function of the sensor signals (32S).

13. Engineering system (1) comprising an engineering station (2), the programming tool (4) according to claim 12, and a safety controller (3) having a plurality of inputs for receiving sensor signals (32S), a plurality of outputs for outputting actuator signals (33S), a first processor (31a) and a second processor (31b) for executing program code, the safety controller (3) being designed to be programmed by the programming tool (4).

14. Engineering system (1) according to claim 13, **characterized in that** the engineering station (2) corresponds to an assembly station, or to a processing station, or to a test station, or to a conveyor unit, or to a packaging and palletizing station.
